# FASCICULE DE BREVET EUROPEEN

(11) **EP 4 096 990 B1**
(45) Date de publication et mention de la délivrance du brevet: **25.06.2025**
(21) Numéro de dépôt: 21706342.9
(22) Date de dépôt: 20.01.2021
(51) Int. Cl.: B62D 25/02, B62D 25/04, B62D 27/02

(54) **RENFORT LONGITUDINAL POUR UNE POUTRE DE BAS DE CAISSE DE VÉHICULE AUTOMOBILE**
LÄNGSVERSTÄRKUNG FÜR EINEN SCHWELLERTRÄGER EINES KRAFTFAHRZEUGS
LONGITUDINAL REINFORCEMENT FOR A ROCKER PANEL BEAM OF A MOTOR VEHICLE

(30) Priorité: 27.01.2020 FR 2000783
(43) Date de publication de la demande: 07.12.2022
(73) Titulaire: Stellantis Auto SAS, 78300 Poissy (FR)
(72) Inventeur: PATOUT, Bernard, 25750 ARCEY (FR); MAURICE, Sebastien, 25600 SOCHAUX (FR); DIAW, Baye, 25420 COURCELLES LES MONTBELIARD (FR); MERESSE, Ludovic, 25750 ARCEY (FR); PERU, Marc, 92290 CHATENAY MALABRY (FR)
(74) Mandataire: BCIP
(86) Numéro de dépôt international: PCT/FR2021/050103
(87) Numéro de publication internationale: WO 2021/152237

(56) Documents cités:
- DE-A1- 102004 044 054
- JP-A- 2002 347 662
- JP-A- 2017 197 056
- US-A1- 2013 200 650

## Description

### Domaine technique

La présente invention revendique la priorité de la demande française 2000783 déposée le 27 Janvier 2020.

L'invention a trait au domaine des véhicules automobiles, et plus particulièrement aux structures de carrosserie de véhicules automobiles.

### Technique antérieure

Les véhicules automobiles comprennent une structure de carrosserie renforcée pour résister aux chocs. Il est donc connu de renforcer les poutres de bas de caisse à l'aide d'éléments de renfort, de manière à améliorer la résistance de la carrosserie lors de différents chocs frontaux ou latéraux auxquels le véhicule peut être soumis. En particulier, les véhicules automobiles à traction électrique comprennent des batteries de traction positionnées à l'arrière du véhicule. Ces batteries apportent une masse supplémentaire à l'arrière du véhicule, qui impacte le comportement du véhicule lors d'un choc frontal. En effet, cette augmentation de la masse du véhicule entraîne une augmentation de l'énergie à absorber lors d'un choc sur l'avant du véhicule et provoque des dégâts additionnels au niveau des pieds avant. Il devient dès lors nécessaire d'ajouter un ou des renforts supplémentaires aux poutres de bas de caisse, et/ou aux pieds avant d'un véhicule automobile à traction électrique.

Le document de brevet publié FR 3 011 801 B1 divulgue une structure de véhicule automobile, et plus particulièrement une structure de poutre de bas de caisse renforcée susceptible de se déformer en cas de choc. La poutre comprend un longeron intérieur et un longeron extérieur formant un volume intérieur, avec au moins un renfort longitudinal positionné dans ledit volume intérieur. Cette structure de poutre de bas de caisse renforcée présente l'avantage d'être de construction légère et simple en ce que le renfort présente une section constante permettant de le réaliser par profilage par galets. Elle ne permet cependant pas de répondre aux exigences de résistance aux chocs, lorsque le véhicule est équipé de batteries de traction formant une masse additionnelle importante à l'arrière.

Un autre exemple d'un tel dispositif peut être vu dans le document US 2013/200650 A1. **Exposé de l'invention** L'invention a pour objectif de pallier au moins un des inconvénients de l'état de la technique susmentionné. Plus particulièrement, l'invention a pour objectif d'améliorer la résistance aux chocs d'une structure de carrosserie de véhicule pénalisée par un ajout de masse importante à l'arrière, plus particulièrement lors d'un choc frontal. L'invention a pour objet une structure de carrosserie de véhicule automobile, comprenant, à chaque côté latéral : une poutre de bas de caisse formant un volume intérieur de la poutre ; et un renfort longitudinal positionné dans le volume intérieur de la poutre ; remarquable en ce que le renfort longitudinal s'étend depuis un pied milieu jusqu'à un pied avant et présente une portion avant coudée logée dans ledit pied avant.

La poutre de bas de caisse est formée par un longeron intérieur et un longeron extérieur assemblés l'un à l'autre, et le renfort longitudinal est logé dans ledit longeron intérieur.

Le renfort longitudinal présente une section transversale en L retourné avec une âme verticale et une semelle horizontale supérieure.

Le longeron intérieur présente une section transversale en U couché avec une âme verticale, une semelle horizontale supérieure et une semelle horizontale inférieure, l'âme verticale du renfort longitudinal étant contre l'âme verticale du longeron intérieur, et la semelle horizontale supérieure du renfort longitudinal étant contre la semelle horizontale supérieure du longeron intérieur.

Selon un mode avantageux de l'invention, la section en L retourné du renfort longitudinal et la section en U couché du longeron intérieur sont présentes dans le pied avant.

Avantageusement, la section en L retourné de la portion avant coudée du renfort longitudinal présente une âme centrale et une semelle verticale arrière. La section en U couché d'une portion avant du longeron intérieur, située dans le pied avant, comprend une âme centrale et deux semelles verticales avant et arrière, la semelle verticale arrière du renfort longitudinal étant en contact avec la semelle verticale arrière du longeron intérieur.

Selon un mode avantageux de l'invention, l'âme verticale du renfort longitudinal est gaufrée par emboutissage.

Par gaufrage, on entend une impression, par emboutissage, de motifs sur l'âme verticale et/ou centrale du renfort longitudinal.

Selon un mode avantageux de l'invention, le gaufrage de l'âme verticale du renfort longitudinal forme des zones de contact et de fixation avec l'âme verticale du longeron intérieur.

Selon un mode avantageux de l'invention, l'âme verticale du renfort longitudinal comporte au moins cinq ajours répartis longitudinalement le long dudit renfort longitudinal.

Selon un mode avantageux de l'invention, la portion avant coudée dans le pied avant comprend à une extrémité supérieure une cloison horizontale dudit pied avant.

Selon un mode avantageux de l'invention, la cloison horizontale est fixée au reste du renfort longitudinal.

Avantageusement, la poutre de bas de caisse comprend des renforts supplémentaires positionnés préférentiellement dans le volume intérieur de la poutre.

Les mesures de l'invention sont intéressantes en ce qu'elles permettent d'améliorer la résistance de la structure de carrosserie, et plus particulièrement, des poutres de bas de caisse du véhicule, lors d'un choc frontal. L'invention permet également d'améliorer la résistance des pieds avant du véhicule lors du choc frontal. De plus, l'invention est particulièrement utile lorsqu'il s'agit d'un véhicule automobile à traction électrique, avec une masse importante ajoutée à l'arrière. Le renfort longitudinal venant se plaquer contre une face extérieure du longeron intérieur, il prend peu de place et permet de conserver les renforts préexistants du véhicule. Cette invention permet en outre de garder la structure de base de la poutre, sans nécessiter le développement d'une structure de poutre propre aux véhicules à traction électrique.

Enfin, cette invention est facile à réaliser et peu coûteuse, avec des techniques et des matériaux connus de l'homme du métier.

D'autres caractéristiques et avantages de la présente invention seront mieux compris à l'aide de la description et des dessins.

### Brève description des dessins

[Fig 1] est une vue en perspective d'une structure de véhicule automobile ;
[Fig 2] représente une vue en perspective d'un renfort longitudinal selon l'invention ;
[Fig 3] montre une vue d'un longeron intérieur d'une poutre de bas de caisse avec le renfort longitudinal de la figure 2, et des renforts supplémentaires.

### Description détaillée

Les exemples décrits ci-après sont donnés à titre indicatif, mais d'autres applications ou modes de réalisation de l'invention non-décrits peuvent être envisagés.

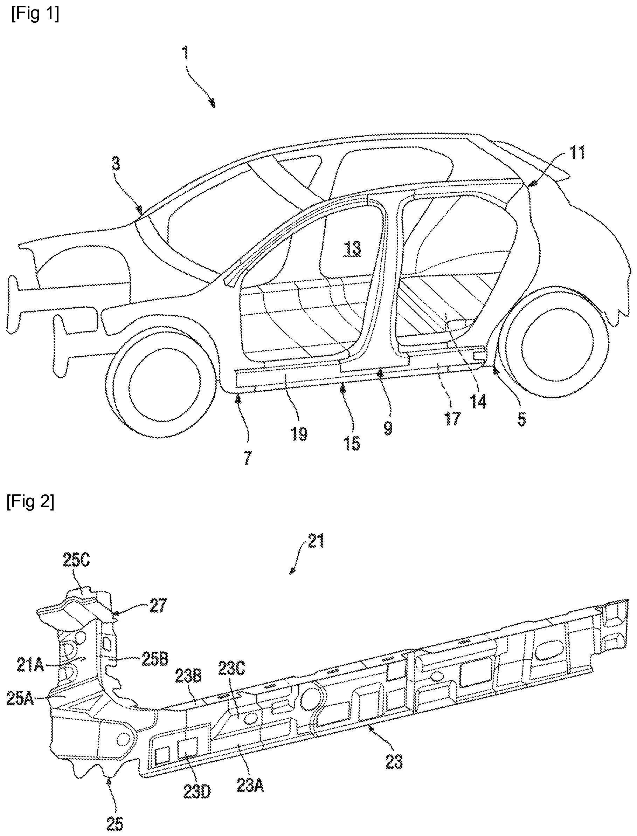

La figure 1 montre une vue en perspective d'une structure de véhicule automobile selon l'invention.

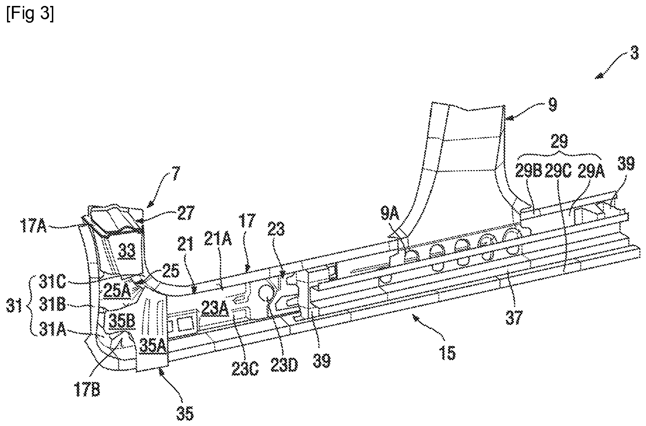

Le véhicule automobile 1 comprend la structure de carrosserie 3 généralement métallique, avec deux côtés latéraux 5. À chacun des côtés latéraux 5 se trouvent, de l'avant à l'arrière du véhicule 1, un pied avant 7, un pied milieu 9 puis un pied arrière 11, les pieds (7, 9, 11) servant notamment à compartimenter un habitacle 13 du véhicule 1. Dans le cas d'un véhicule 1 à traction électrique, des batteries 14 de traction sont positionnées à l'arrière du véhicule 1, entre les pieds arrière 11. De plus, une poutre de bas de caisse 15 s'étend entre les pieds avant 7 et arrière 11 et de chaque côté 5 du véhicule 1, au niveau du bas de caisse. Chaque poutre 15 est formée par un longeron intérieur 17 et un longeron extérieur 19 (le longeron extérieur 19 n'étant visible que sur cette figure) assemblés l'un à l'autre de manière à former un volume intérieur de la poutre 15. Le volume intérieur accueille un renfort, illustré aux figures 2 et 3 et détaillé ci-après, en vue de renforcer la structure des poutres 15 et des pieds avant 7 lors d'un choc frontal. Ce renforcement est particulièrement utile en présence de la masse supplémentaire engendrée par les batteries 14 de traction, la masse étant susceptible d'occasionner des dégâts supplémentaires à la structure 3 lors d'un choc frontal.

La figure 2 montre une vue en perspective d'un renfort longitudinal selon l'invention.

Le renfort longitudinal 21 selon l'invention comprend une portion arrière 23 allongée et une portion avant coudée 25. Le renfort longitudinal 21 présente une section transversale en L retourné à 180° dans chacune des portions arrière 23 et avant 25. Ainsi, la portion arrière 23 dudit renfort 21 présente une âme verticale 23A et une semelle horizontale supérieure 23B. Avantageusement, l'âme verticale 23A du renfort longitudinal 21 présente un gaufrage réalisé par emboutissage. Par gaufrage, on entend que l'âme verticale 23A présente des bossages formant des zones de contact et de fixation 23C au longeron intérieur (non visible sur cette figure). Ainsi, l'âme verticale 23A présente des zones 23C formant des bosses et des creux. De plus, l'âme verticale 23A comprend des ajours 23D, au nombre d'au moins cinq, qui sont répartis longitudinalement le long du renfort longitudinal 21.

La portion avant coudée 25 du renfort longitudinal 21 présente la section transversale en L retourné, et forme une âme centrale 25A avec une semelle verticale arrière 25B. L'âme centrale 25A de la portion avant coudée 25 peut en outre présenter le gaufrage précédemment décrit pour l'âme verticale 23A. Optionnellement, à une extrémité supérieure 25C de la portion avant coudée 25 se trouve une cloison horizontale 27 du pied avant (le pied avant n'étant pas visible sur cette figure), fixée au reste du renfort longitudinal 21, et, plus particulièrement, à une face extérieure 21A dudit renfort 21. Cette cloison horizontale 27 présente, en outre, un bosselage suivant une section longitudinale de ladite cloison 27.

La figure 3 montre une vue du renfort longitudinal monté dans le longeron intérieur de la poutre de bas de caisse, avec des renforts supplémentaires. Seul le longeron intérieur de la poutre de bas de caisse est représenté sur cette figure.

Le longeron intérieur 17 de la poutre 15 présente une portion arrière 29 allongée et une portion avant coudée 31. La portion arrière 29 du longeron intérieur 17 présente une section transversale en U couché avec une âme verticale 29A, une semelle horizontale supérieure 29B et une semelle horizontale inférieure 29C. La portion avant coudée 31 du longeron intérieur 17 présente également une section en U couché, avec une âme centrale 31A et deux semelles verticales avant 31B et arrière 31C. Cette portion avant coudée 31 du longeron intérieur 17 forme une partie inférieure du pied avant 7.

Le renfort longitudinal 21 est positionné dans le volume intérieur de la poutre 15, et, plus particulièrement, dans le longeron intérieur 17 de la poutre 15. Le renfort longitudinal 21 s'étend du pied avant 7 au pied milieu 9, le renfort 21 étant visible au travers d'orifices 9A positionnés dans le pied milieu 9. Le renfort longitudinal 21 est avantageusement fixé à une face extérieure 17B du longeron intérieur 17. Ainsi, la portion avant coudée 25 du renfort longitudinal 21 se trouve positionnée dans la portion avant coudée 31 du longeron intérieur 17, la portion avant coudée 25 du renfort 21 étant dès lors située dans le pied avant 7 de la structure de carrosserie 3. Ainsi, la section en L retourné du renfort longitudinal 21 et la section en U couché du longeron intérieur 17 sont présentes dans le pied avant 7.

L'âme verticale 23A de la portion arrière 23 du renfort longitudinal 21 est positionnée contre l'âme verticale 29A de la portion arrière 29 du longeron intérieur 17. De plus, la semelle horizontale supérieure (non visible sur cette figure) de la portion arrière 23 du renfort longitudinal 21 est positionnée contre la semelle horizontale supérieure 29B de la portion arrière 29 du longeron intérieur 17. Avantageusement, les zones de contact et de fixation 23C retrouvées sur l'âme verticale 23A du renfort longitudinal 21 entrent en contact avec l'âme verticale 29A du longeron intérieur 17. De la même manière, l'âme centrale 25A de la portion avant couchée 25 du renfort longitudinal 21 est positionnée contre l'âme centrale 31A de la portion avant 31 du longeron intérieur 17. De plus, la semelle verticale arrière (non visible sur cette figure) de la portion avant 25 du renfort longitudinal 21 est positionnée contre la semelle verticale arrière 31C de la portion avant 31 du longeron intérieur 17.

La cloison horizontale 27, positionnée à l'extrémité supérieure (non visible sur cette figure) de la portion avant coudée 25 du renfort longitudinal 21, s'étend entre les longerons intérieur 17 et extérieur de la poutre 15. Elle s'étend au-dessus d'un renfort avant 33, renfort 33 qui présente une section transversale en U couché et qui s'étend depuis une extrémité supérieure 17A du longeron intérieur 17, en direction du longeron extérieur. La poutre 15 comprend, en outre, un renfort avant inférieur 35 positionné dans le coude de la portion avant coudée 31 du longeron intérieur 17. Ce renfort avant inférieur 35 présente une forme de **T,** avec une portion verticale 35A fixée aux semelles horizontales supérieure 29B et inférieure 29C du longeron intérieur 17 et une portion horizontale 35B qui s'étend depuis ladite portion verticale 35A vers la semelle verticale avant 31B de la portion avant coudée 31. Ce renfort avant inférieur 35 améliore la résistance du pied avant 7 aux chocs frontaux.

La poutre 15 comprend en outre un renfort de profilé arrière 37 qui s'étend depuis le pied milieu 9 vers le pied arrière (non visible sur cette figure) de la structure de carrosserie 3. Ce renfort de profilé arrière 37 présente une section transversale en U couché, rattaché au longeron intérieur 17 par deux renforts en compression 39. Ces renforts (37, 39) ont vocation à améliorer l'amortissement des chocs latéraux.

## Revendications

1. Structure de carrosserie (3) de véhicule automobile (1), comprenant, à chaque côté latéral (5) :
- une poutre de bas de caisse (15) formant un volume intérieur de la poutre (15) ; et
- un renfort longitudinal (21) positionné dans le volume intérieur de la poutre (15),
le renfort longitudinal (21) s'étendant depuis un pied milieu (9) jusqu'à un pied avant (7) et présentant une portion avant coudée (25) logée dans ledit pied avant (7), et le renfort longitudinal présente une section transversale en L retourné avec une âme verticale (23A) et une semelle horizontale supérieure (23B),
la poutre de bas de caisse (15) étant formée par un longeron intérieur (17) et un longeron extérieur (19) assemblés l'un à l'autre, le renfort longitudinal (21) étant logé dans ledit longeron intérieur (17),
**caractérisée en ce que** le longeron intérieur (17) présente une section transversale en U couché avec une âme verticale (29A), une semelle horizontale supérieure (29B) et une semelle horizontale inférieure (29C), l'âme verticale (23A) du renfort longitudinal (21) étant contre l'âme verticale (29A) du longeron intérieur (17), et la semelle horizontale supérieure (23B) du renfort longitudinal (21) étant contre la semelle horizontale supérieure (29B) du longeron intérieur (17).

2. Structure de carrosserie (3) de véhicule automobile (1) selon la revendication 1, **caractérisée en ce que** la section en L retourné du renfort longitudinal (21) et la section en U couché du longeron intérieur (17) sont présentes dans le pied avant (7).

3. Structure de carrosserie (3) de véhicule automobile (1) selon l'une des revendications 1 à 2, **caractérisée en ce que** l'âme verticale (23A) du renfort longitudinal (21) est gaufrée par emboutissage.

4. Structure de carrosserie (3) de véhicule automobile (1) selon l'une des revendications 1 et 2, et selon la revendication 6, **caractérisée en ce que** le gaufrage de l'âme verticale (23A) du renfort longitudinal (21) forme des zones de contact et de fixation (23C) avec l'âme verticale (29A) du longeron intérieur (17).

5. Structure de carrosserie (3) de véhicule automobile (1) selon l'une des revendications 1 à 4, **caractérisée en ce que** l'âme verticale (23A) du renfort longitudinal (21) comporte au moins cinq ajours (23D) répartis longitudinalement le long dudit renfort longitudinal (21).

6. Structure de carrosserie (3) de véhicule automobile (1) selon l'une des revendications 1 à 5, **caractérisée en ce que** la portion avant coudée (25) dans le pied avant (7) comprend à une extrémité supérieure (17A) une cloison horizontale (27) dudit pied avant (7).

7. Structure de carrosserie (3) de véhicule automobile (1) selon la revendication 6, **caractérisée en ce que** la cloison horizontale (27) est fixée au reste du renfort longitudinal (21).

## Patentansprüche

1. Karosseriestruktur (3) eines Kraftfahrzeugs (1), die an jeder Seitenseite (5) Folgendes umfasst:
- einen Unterbodenträger (15), der ein Innenvolumen des Trägers (15) bildet, und
- eine im Innenraum des Balkens (15) angeordnete Längsverstärkung (21),
die Längsverstärkung (21), die sich von einem mittleren Fuß (9) zu einem vorderen Fuß (7) erstreckt und einen abgewinkelten vorderen Abschnitt (25) aufweist, der in dem vorderen Fuß (7) untergebracht ist, und die Längsverstärkung einen umgedrehten L-förmigen Querschnitt mit einem vertikalen Steg (23A) und einer oberen horizontalen Sohle (23B) aufweist,
der Unterbodenträger (15) aus einem inneren Längsträger (17) und einem äußeren Längsträger (19) gebildet ist, die miteinander verbunden sind, wobei die Längsverstärkung (21) in dem inneren Längsträger (17) untergebracht ist,
**dadurch gekennzeichnet, dass** der innere Längsträger (17) einen liegend U-förmigen Querschnitt mit einem vertikalen Steg (29A), einer oberen horizontalen Sohle (29B) und einer unteren horizontalen Sohle (29C) aufweist, wobei der vertikale Steg (23A) der Längsträgerverstärkung (21) gegen den vertikalen Steg (29A) des inneren Längsträgers (17) und die obere horizontale Sohle (23B) der Längsträgerverstärkung (21) gegen die obere horizontale Sohle (29B) des inneren Längsträgers (17) gerichtet ist.

2. Karosseriestruktur (3) eines Kraftfahrzeugs (1) nach Anspruch 1, **dadurch gekennzeichnet, dass** der umgedrehte L-Abschnitt der Längsverstärkung (21) und der liegende U-Abschnitt des inneren Längsträgers (17) im vorderen Fuß (7) vorhanden sind.

3. Karosseriestruktur (3) eines Kraftfahrzeugs (1) nach einem der Ansprüche 1 bis 2, **dadurch gekennzeichnet, dass** der vertikale Steg (23A) der Längsverstärkung (21) durch Tiefziehen geprägt ist.

4. Karosseriestruktur (3) eines Kraftfahrzeugs (1) nach einem der Ansprüche 1 und 2 und nach Anspruch 6, **dadurch gekennzeichnet, dass** die Prägung des vertikalen Steges (23A) der Längsverstärkung (21) Berührungs- und Befestigungsbereiche (23C) mit dem vertikalen Steg (29A) des inneren Längsträgers (17) bildet.

5. Karosseriestruktur (3) eines Kraftfahrzeugs (1) nach einem der Ansprüche 1 bis 4, **dadurch gekennzeichnet, dass** der vertikale Steg (23A) der Längsverstärkung (21) mindestens fünf Durchbrüche (23D) aufweist, die in Längsrichtung entlang der Längsverstärkung (21) verteilt sind.

6. Karosseriestruktur (3) eines Kraftfahrzeugs (1) nach einem der Ansprüche 1 bis 5, **dadurch gekennzeichnet, dass** der gekrümmte vordere Abschnitt (25) in dem vorderen Fuß (7) an einem oberen Ende (17A) eine horizontale Trennwand (27) des vorderen Fußes (7) umfasst.

7. Karosseriestruktur (3) eines Kraftfahrzeugs (1) nach Anspruch 6, **dadurch gekennzeichnet, dass** die horizontale Trennwand (27) am Rest der Längsverstärkung (21) befestigt ist.

## Claims

1. Body structure (3) of a motor vehicle (1), comprising, at each lateral side (5):
- a bottom body beam (15) forming an internal volume of the beam (15); and
longitudinal reinforcement (21) positioned in the interior volume of the beam (15),
the longitudinal reinforcement (21) extending from a middle foot (9) to a front foot (7) and having an elbowed front portion (25) housed in said front foot (7), and the longitudinal reinforcement has an inverted L-shaped cross-section with a vertical core (23A) and an upper horizontal sole (23B),
the lower body beam (15) being formed by an inner spar (17) and an outer spar (19) assembled to each other, the longitudinal reinforcement (21) being housed in said inner spar (17),
**characterised in that** the inner spar (17) has a U-shaped cross-section lying with a vertical web (29A), an upper horizontal sole (29B) and a lower horizontal sole (29C), the vertical web (23A) of the longitudinal reinforcement (21) being against the vertical web (29A) of the inner spar (17), and the upper horizontal sole (23B) of the longitudinal reinforcement (21) being against the upper horizontal sole (29B) of the inner spar (17).

2. Motor vehicle body structure (3) according to claim 1, **characterised in that** the inverted L-shaped section of the longitudinal reinforcement (21) and the recumbent U-shaped section of the inner spar (17) are present in the front foot (7).

3. Body structure (3) of a motor vehicle (1) according to one of Claims 1 to 2, **characterised in that** the vertical core (23A) of the longitudinal reinforcement (21) is embossed by stamping.

4. Bodywork structure (3) of a motor vehicle (1) according to one of Claims 1 and 2 and according to Claim 6, **characterised in that** the embossing of the vertical core (23A) of the longitudinal reinforcement (21) forms zones of contact and of attachment (23C) with the vertical core (29A) of the inner spar (17).

5. Bodywork structure (3) of a motor vehicle (1) according to one of Claims 1 to 4, **characterised in that** the vertical core (23A) of the longitudinal reinforcement (21) comprises at least five openings (23D) distributed longitudinally along said longitudinal reinforcement (21).

6. Bodywork structure (3) of a motor vehicle (1) according to one of Claims 1 to 5, **characterised in that** the bent front portion (25) in the front leg (7) comprises, at an upper end (17A), a horizontal partition (27) of the said front leg (7).

7. Bodywork structure (3) of a motor vehicle (1) according to claim 6, **characterised in that** the horizontal partition (27) is fixed to the remainder of the longitudinal reinforcement (21).
